# DEMANDE DE BREVET EUROPEEN

(11) **EP 0 965 769 A1**
(43) Date de publication de la demande: **22.12.1999**
(21) Numéro de dépôt: 99410078.2
(22) Date de dépôt: 18.06.1999
(51) Int. Cl.: F16D 23/04

(54) **Bague de synchronisation frittée**

(30) Priorité: 19.06.1998 FR 9807942
(71) Demandeur: Federal Mogul Sintered Products, 38113 Veurey-Voroize (FR)
(72) Inventeur: Gueydan, Henri, 38430 Moirans (FR)
(74) Mandataire: de Beaumont, Michel

(57) **Abrégé**

L'invention concerne une bague de synchronisation comportant un alésage interne conique (14) muni de dents axiales acérées.

## Description

La présente invention concerne une bague de synchronisation du type utilisé dans les boîtes à vitesses.

Dans une boîte à vitesses, une bague de synchronisation est destinée à faire coïncider progressivement la vitesse de rotation d'un engrenage avec la vitesse de rotation d'un arbre, l'engrenage ou l'arbre étant au préalable désaccouplé et continuant à tourner par inertie.

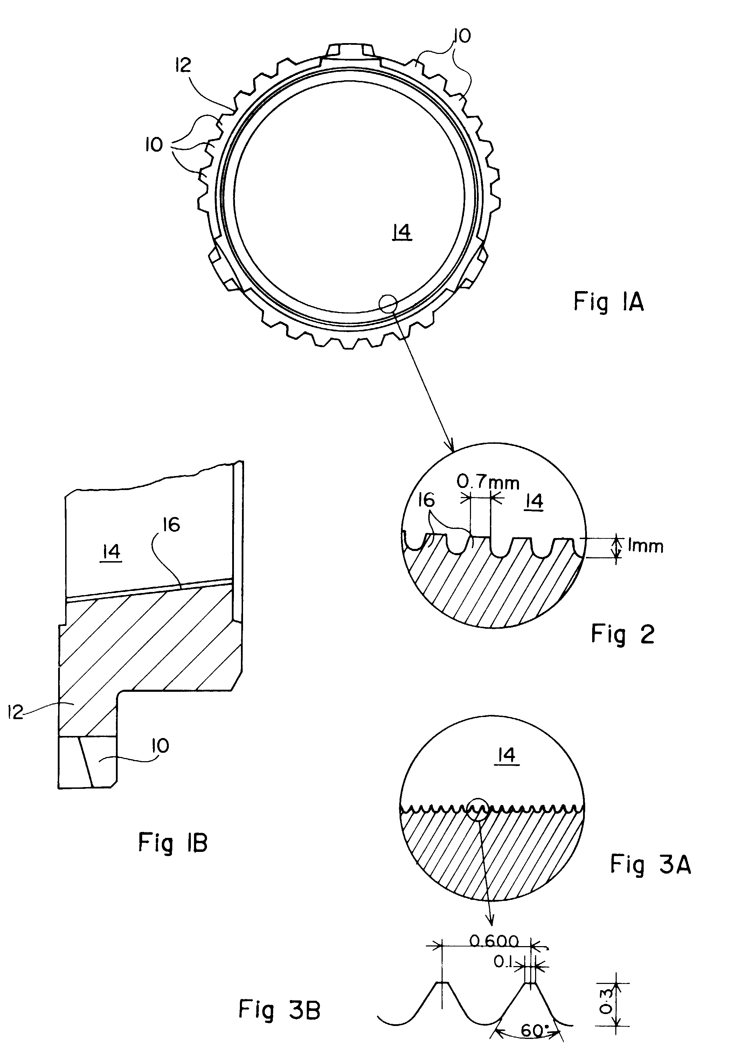

Les figures 1A et 1B représentent une vue de face et une vue en coupe partielle agrandie d'une bague de synchronisation classique. La bague comprend des dents ou crabots 10 régulièrement répartis sur son pourtour. Comme cela est visible à la figure 1B, les crabots 10 ne s'étendent que sur une partie de la hauteur de la bague et affleurent une extrémité de celle-ci. Par ailleurs, la bague comporte une zone périphérique amincie 12 qui se raccorde aux crabots 10.

La bague de synchronisation est munie d'un alésage central conique 14, le plus grand diamètre étant du côté des crabots 10, comme cela est visible à la figure 1B. Cet alésage conique est destiné à coopérer avec une portée conique d'un arbre (non représenté) par translation axiale afin d'assurer une synchronisation rapide des vitesses de rotation de la bague et de l'arbre par frottement puis égalisation des vitesses des parties coniques.

Bien entendu, les pièces d'une boîte à vitesses sont lubrifiées afin d'éviter l'usure et le grippage. Mais la lubrification des parties coniques de la bague de synchronisation et de l'arbre sont incompatibles avec le souhait d'obtenir un arrêt rapide de ces deux pièces l'une par rapport à l'autre.

La figure 2 représente une solution classique employée pour améliorer la synchronisation des parties coniques de la bague et de l'arbre. Cette figure 2 représente un agrandissement de la paroi de l'alésage conique 14, selon la vue de la figure 1A. L'alésage 14 est muni de dents axiales 16 régulièrement réparties sur la surface de l'alésage. Comme cela est indiqué, les dents 16 sont munies d'un méplat d'environ 0,7 mm et ont une hauteur d'environ 1 mm. Le pas des dents est de l'ordre de 1,5 mm. Les méplats sont bien entendu courbes de manière à former la surface conique de l'alésage 14.

Avec cette configuration, on parvient à évacuer l'huile qui s'infiltre entre les deux surfaces coniques par les espaces entre les dents 16.

Un avantage de la bague de synchronisation qui vient d'être décrite, notamment de la configuration axiale des dents 16, est qu'elle n'offre aucune surface en contre dépouille, et donc qu'elle peut être obtenue par frittage.

Toutefois, il s'avère que les dents 16 ne sont pas suffisamment efficaces, c'est-à-dire qu'elles ne permettent pas d'obtenir un coefficient de frottement suffisamment élevé entre la bague de synchronisation et l'arbre. Il en résulte que l'on doit appliquer des efforts axiaux considérables sur la bague de synchronisation pour obtenir l'égalisation des vitesses.

Pour améliorer les caractéristiques de frottement, on a proposé de réaliser un filetage sur la surface de l'alésage 14, à la place des dents 16. Cette solution s'avère particulièrement efficace, mais elle ne permet plus de réaliser la bague de synchronisation en une seule opération de frittage, car le filetage offre de nombreuses surfaces en contre dépouille. Le filetage doit être obtenu par une étape d'usinage supplémentaire.

Un objet de la présente invention est de prévoir une bague de synchronisation qui puisse être réalisée en une seule opération de frittage tout en offrant des caractéristiques de frottement particulièrement bonnes.

Pour atteindre cet objet, la présente invention prévoit une bague de synchronisation comportant un alésage interne conique muni de dents axiales acérées.

Selon un mode de réalisation de la présente invention, les sommets des dents comportent un méplat de largeur inférieure à 0,2 mm.

Selon un mode de réalisation de la présente invention, le pas des dents est inférieur à 0,7 mm.

Selon un mode de réalisation de la présente invention, la hauteur des dents est inférieure à 0,4 mm.

Selon un mode de réalisation de la présente invention, la bague est frittée.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A et 1B, précédemment décrites, représentent une vue de face et une vue en coupe partielle agrandie d'une bague de synchronisation classique ;
la figure 2, précédemment décrite, représente une vue agrandie de la paroi de l'alésage de la bague de synchronisation de la figure 1A ;
la figure 3A représente, à la même échelle que la figure 2, une vue agrandie d'une paroi d'alésage de bague de synchronisation selon la présente invention ; et
la figure 3B représente une vue partielle agrandie de la figure 3A.

Comme on l'a précédemment indiqué en relation avec la figure 2, dans une bague de synchronisation frittée classique, les dents de l'alésage central sont munies de méplats d'environ 0,7 mm. Malgré la présence de ces dents, on n'obtient pas les caractéristiques de frottement souhaitées sur une portée conique correspondante d'un arbre, ce qui nécessite l'emploi d'efforts axiaux élevés pour obtenir l'égalisation des vitesses de la bague de synchronisation et de l'arbre.

Selon la présente invention, on a constaté que les mauvaises caractéristiques de frottement sont dues à la présence d'un film de lubrifiant important qui se crée systématiquement entre les méplats des dents 16 et la portée conique de l'arbre, ceci malgré l'existence de voies d'évacuation de l'huile entre les dents.

Pour améliorer les caractéristiques de frottement, on propose, selon l'invention, d'utiliser des dents à sommets acérés, les dents étant toujours disposées dans le sens axial de la bague afin de permettre de réaliser la bague de synchronisation par frittage. En pratique, les sommets les plus acérés que l'on puisse obtenir comportent des méplats ou des arrondis qui dépendent de la technique de fabrication utilisée. En frittage, les sommets comporteront un méplat inférieur à 0,2 mm, généralement de l'ordre de 0,1 mm.

En rendant les dents plus acérées, on diminue leur résistance. Pour conserver la résistance globale initiale, on multiplie le nombre de dents.

La figure 3A représente, à la même échelle que la figure 2, une vue agrandie de la paroi d'alésage d'une bague de synchronisation selon la présente invention. On constate, par rapport à la figure 2, que les dents sont plus petites et plus rapprochées.

La figure 3B représente une vue agrandie des dents de la figure 3A. A titre d'exemple, ces dents ont un méplat de 0,1 mm, un pas de 0,6 mm, une hauteur de 0,3 mm et un angle au sommet de 60°. La dimension de 0,1 mm des méplats est sensiblement la plus petite dimension que l'on puisse obtenir par frittage. Ces dimensions sont bien entendu variables, mais on choisira de préférence un méplat inférieur à 0,2 mm, un pas inférieur à 0,7 mm et une hauteur inférieure à 0,4 mm.

En présence de lubrifiant, il s'avère que les dents acérées selon la présente invention offrent l'intérêt de chasser le maximum d'huile se trouvant au niveau des sommets des dents. Les caractéristiques de frottement obtenues sont optimales pour permettre une synchronisation rapide.

Une bague de synchronisation selon l'invention sera de préférence frittée, ce qui permet d'obtenir une bague terminée en une seule étape de fabrication. La poudre utilisée pour le frittage peut être celle utilisée pour les bagues classiques.

## Revendications

1. Bague de synchronisation comportant un alésage interne conique (14) muni de dents axiales, caractérisée en ce que les sommets des dents comportent un méplat de largeur inférieure à 0,2 mm.

2. Bague de synchronisation selon la revendication 1, caractérisée en ce que le pas des dents est inférieur à 0,7 mm.

3. Bague de synchronisation selon la revendication 2, caractérisée en ce que la hauteur des dents est inférieure à 0,4 mm.

4. Bague de synchronisation selon l'une quelconque des revendications précédentes, caractérisée en ce qu'elle est frittée.
